# EUROPEAN PATENT SPECIFICATION

(11) **EP 3 609 096 B1**
(45) Date of publication and mention of the grant of the patent: **22.10.2025**
(21) Application number: 17904689.1
(22) Date of filing: 21.08.2017
(51) Int. Cl.: H04L 45/00, H04L 45/02, H04L 41/12, H04B 10/29, H04B 10/032

(54) **METHOD AND DEVICE FOR DETERMINING AND CONSTRUCTING TOPOLOGY IN PASSIVE OPTICAL NETWORK**
VERFAHREN UND VORRICHTUNG ZUR BESTIMMUNG UND KONSTRUKTION EINER TOPOLOGIE IN EINEM PASSIVEN OPTISCHEN NETZWERK
PROCÉDÉ ET DISPOSITIF POUR DÉTERMINER ET CONSTRUIRE UNE TOPOLOGIE DANS UN RÉSEAU OPTIQUE PASSIF

(30) Priority: 05.04.2017 CN 201710217394
(43) Date of publication of application: 12.02.2020
(73) Proprietor: ZTE Corporation, Shenzhen, Guangdong 518057 (CN)
(72) Inventor: GENG, Dan, Shenzhen Guangdong518057 (CN); ZHANG, Weiliang, Shenzhen Guangdong 518057 (CN); YUAN, Liquan, Shenzhen Guangdong 518057 (CN); MA, Zhuang, Shenzhen Guangdong 518057 (CN); YANG, Bo, Shenzhen Guangdong 518057 (CN); GUO, Yong, Shenzhen Guangdong 518057 (CN)
(74) Representative: Canzler & Bergmeier Patentanwälte Partnerschaft mbB
(86) International application number: PCT/CN2017/098276
(87) International publication number: WO 2018/184340

(56) References cited:
- EP-A1- 2 618 508
- EP-B1- 2 618 508
- WO-A1-2008/117035
- WO-A1-2009/094943
- WO-A1-2016/158846
- CN-A- 101 895 791
- CN-A- 102 082 976
- CN-A- 102 082 976
- CN-A- 102 131 131
- US-A1- 2010 272 436
- US-A1- 2010 272 436
- US-A1- 2012 141 139

## Description

### TECHNICAL FIELD

The present application relates to, but is not limited to, the field of communication, and particularly relates to a method and apparatus for determining and constructing a topology in a passive optical network (PON), a reach extender and an optical line terminal (OLT).

### BACKGROUND

With the development of network technology, a great quantity of voice, data, video and other services can be transmitted by networks. However, requirements on bandwidth are increasing along with emergence of new services such as virtual videos. In order to meet the above requirements, a passive optical network (PON) with a rate of 40G is produced.

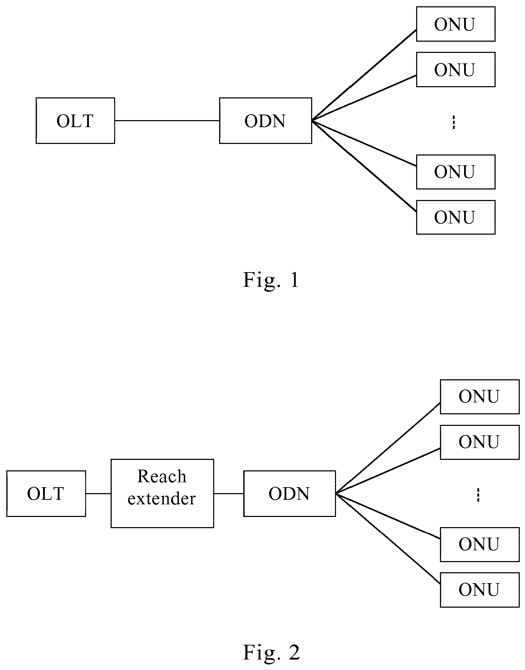

A topology in a PON system is as shown in Fig. 1. The PON system generally consists of an optical line terminal (OLT) at a local side, an optical network unit (ONU) at a user side, and an optical distribution network (ODN), and employs a point-to-multipoint network structure. The ODN includes passive optical components such as single-mode fibers, optical splitters and optical connectors, and provides an optical transmission medium for physical connection between the OLT and the ONU. When a distance between the OLT and the ONU exceeds 20 km, optical power budget of the existing PON system cannot meet an error rate requirement of signals in normal communication between the OLT and the ONU. Thus, it is necessary to add a reach extender in the PON system to amplify the signals transmitted by the OLT and the ONU. Referring to Fig. 2, the reach extender is added between the OLT and the ODN. The PON system with the reach extender can support normal communication when the OLT is far away from the ONU. As the optical fiber between the OLT and the reach extender (RE) is long, this optical fiber is prone to failure, thus protection of this optical fiber needs to be considered. Due to close to a user system, the PON system has a very sensitive price. It is expected that the PON system will be economical, minimize redundant device, and reduce its cost. In a case where only the protection of the optical fiber is considered without increasing the redundant OLT and RE in the system, there is no solution to enable the OLT and the RE to achieve protection switching at present. In addition, when the PON system includes a plurality of REs, in order to realize efficient fault location and management, the OLT needs to know ONUs connected to each of the REs. That is, the OLT needs to know a topology of the entire PON system. However, currently, there is no solution to enable the OLT to know the topology of the entire PON system.

### SUMMARY

The following is a summary of subject matters described in detail in the disclosure. This summary is not intended to limit the scope of the claims.

Embodiments of the present disclosure provide a method and apparatus for determining and constructing a topology in a passive optical network, a reach extender and an optical line terminal, so as to construct the topology in the passive optical network with the reach extender.

A method for determining a topology in a passive optical network comprising an optical line terminal, a reach extender and a plurality of optical network units, wherein the method comprises: determining, by the reach extender, optical network units associated with the reach extender; and reporting, by the reach extender, the following information to the optical line terminal to allow the optical line terminal to determine the topology in the passive optical network according to the reported information: identification information of the optical network units associated with the reach extender; and identification information of the reach extender, wherein determining, by the reach extender, the optical network units associated with the reach extender is implemented by the following manner: monitoring, by the reach extender, a ranging request message transmitted by the optical line terminal to any one of the optical network units, the ranging request message carrying identification information of the optical network unit to be ranged and an uplink bandwidth allocated to the optical network unit to transmit a registration message; and recording the identification information of the optical network unit carried in the ranging request message if the reach extender receives the uplink data of the optical network unit in the uplink bandwidth.

In an embodiment, the reach extender reports the identification information of the optical network unit associated with the reach extender to the optical line terminal when the reach extender fails to detect at least one of a downlink signal and an uplink signal and is switched from a working channel to a standby channel.

In an embodiment, the step of switching from the working channel to the standby channel when the reach extender fails to detect at least one of the downlink signal and the uplink signal includes: parsing a bandwidth allocation domain in the downlink frame when the reach extender detects the downlink signal but not the uplink signal, and switching from the working channel to the standby channel if an uplink bandwidth allocated to the optical network unit connected to the reach extender exists in the downlink frame and no uplink signal is detected within a time period corresponding to the uplink bandwidth.

In an embodiment, after the step of switching from the working channel to the standby channel, the method further includes: transmitting, by the reach extender, a switching message to the optical line terminal, the switching message carrying the following information: identity information of the reach extender and information of completing the switching from the working channel to the standby channel.

In an embodiment, before the step of reporting, by the reach extender, the information to the optical line terminal, the method further includes: when the reach extender accesses the passive optical network, receiving, by the reach extender, a registration request of the optical line terminal, and returning, by the reach extender, a registration response message to the optical line terminal. The registration response message carries at least one piece of the following information: the identification information of the reach extender, port information of the reach extender, information of whether the reach extender is equipped with a protection interface, position information of the reach extender, port transmission power information of the reach extender, and identification information of a passive optical network of the optical line terminal to which the reach extender is connected.

In an embodiment, after the step of returning, by the reach extender, the registration response message to the optical line terminal, the method further includes: receiving, by the reach extender, an uplink bandwidth allocated by the optical line terminal, the uplink bandwidth being used for reporting whether an uplink frame is received in the uplink bandwidth allocated to the optical network unit.

In an embodiment, after the step of receiving, by the reach extender, the uplink bandwidth allocated by the optical line terminal, the method further includes: if the reach extender receives the uplink frame in the uplink bandwidth, extracting a value of a superframe counter carried in the downlink frame or recording a value of a timestamp corresponding to a current local timer, and reporting the identification information of the reach extender and the value of the superframe counter to the optical line terminal in the uplink bandwidth; or reporting the identification information of the reach extender and the value of the timestamp corresponding to the local timer of the reach extender to the optical line terminal in the uplink bandwidth.

An apparatus for determining a topology in a passive optical network comprising an optical line terminal, a reach extender and a plurality of optical network units, wherein the apparatus is arranged in the reach extender, and comprises:a determining module configured to determine optical network units associated with the reach extender; and a reporting module configured to report the following information to the optical line terminal to allow the optical line terminal to determine the topology in the passive optical network according to the reported information: identification information of the optical network units associated with the reach extender; and identification information of the reach extender,wherein the determining module is configured to determine the optical network units associated with the reach extender by the following manners: monitoring a ranging request message transmitted by the optical line terminal to any one of the optical network units, the ranging request message carrying identification information of the optical network unit to be ranged and an uplink bandwidth allocated to the optical network unit to transmit a registration message; and recording the identification information of the optical network unit carried in the ranging request message if the reach extender receives the uplink data of the optical network unit in the uplink bandwidth.

A reach extender includes the apparatus for determining the topology in the passive optical network.

An apparatus for determining a topology in a passive optical network includes a memory and a processor, wherein the memory stores the following instructions, which, when executed, implement the following step: reporting one or more pieces of the following information to an optical line terminal: identification information of an optical network unit associated with the reach extender, identification information of the reach extender, uplink data received in an uplink bandwidth corresponding to a bandwidth allocation carried by a downlink frame corresponding to a designated superframe counter value, uplink data received at a moment corresponding to a locally designated timestamp value of the reach extender, a value of a superframe counter, and a value of a timestamp corresponding to a local timer of the reach extender; and the processor is configured to execute the instructions stored in the memory.

A method for determining a topology in a passive optical network comprising an optical line terminal, a reach extender and a plurality of optical network units, wherein the method comprises: receiving, by the optical line terminal, the following information reported by the reach extender: identification information of all optical network units connected to the reach extender, and identification information of the reach extender, wherein the identification information of the optical network units is obtained by the reach extender during ranging; and determining, by the optical line terminal, the topology in the passive optical network according to the received information.

An apparatus for determining a topology in a passive optical network comprising an optical line terminal, a reach extender and a plurality of optical network units, the apparatus is arranged in the optical line terminal, and comprising:a receiving module configured to receive the following information reported by the reach extender: identification information of optical network units associated with the reach extender, and identification information of the reach extender; and a constructing module configured to determine the topology in the passive optical network according to the received information.

In summary, the embodiments of the present disclosure provide the method and apparatus for determining and constructing the topology in the passive optical network, so as to determine and construct the topology in the passive optical network with the reach extender.

Other aspects will become apparent upon reading and understanding the drawings and detailed description.

### BRIEF DESCRIPTION OF DRAWINGS

Fig. 1 is a topology diagram of a passive optical network.
Fig. 2 is a topology diagram of a long-distance passive optical network.
Fig. 3 is a flowchart of a method for constructing a topology in a passive optical network at a reach extender side according to Embodiment 1 of the present disclosure.
Fig. 4 is a topology diagram of a passive optical network for protecting an optical fiber between an OLT and an RE according to Embodiment 2 of the present disclosure.
Fig. 5 is a flowchart of completing protection switching between an OLT and an RE according to Embodiment 2 of the present disclosure.
Fig. 6 is a topology diagram of a passive optical network for protecting an optical fiber between an RE and an optical splitter in a first scenario according to an embodiment of the present disclosure.
Fig. 7 is a topology diagram of a passive optical network for protecting an optical fiber between an RE and an optical splitter in a second scenario according to an embodiment of the present disclosure.
Fig. 8 is a topology diagram of a passive optical network for protecting optical fibers between REs and optical splitters in a system including a plurality of REs in a third scenario according to an embodiment of the present disclosure.
Fig. 9 is a flowchart of completing protection switching between an OLT and an RE according to Embodiment 3 of the present disclosure.
Fig. 10 is a topology diagram of a passive optical network for protecting long-distance optical fibers on two sides of an RE according to Embodiment 4 of the present disclosure.
Fig. 11 is a flowchart of completing protection switching between an OLT and an RE according to Embodiment 4 of the present disclosure.
Fig. 12 is a flowchart of obtaining an association relationship between an RE and an ONU according to Embodiment 5 of the present disclosure.
Fig. 13 is a schematic diagram of an apparatus for constructing a topology in a passive optical network according to Embodiment 6 of the present disclosure.
Fig. 14 is a schematic diagram of an apparatus for constructing a topology in a passive optical network according to Embodiment 7 of the present disclosure.

### DETAILED DESCRIPTION

The embodiments of the present disclosure will be described in detail below with reference to the accompanying drawings.

### Embodiment 1

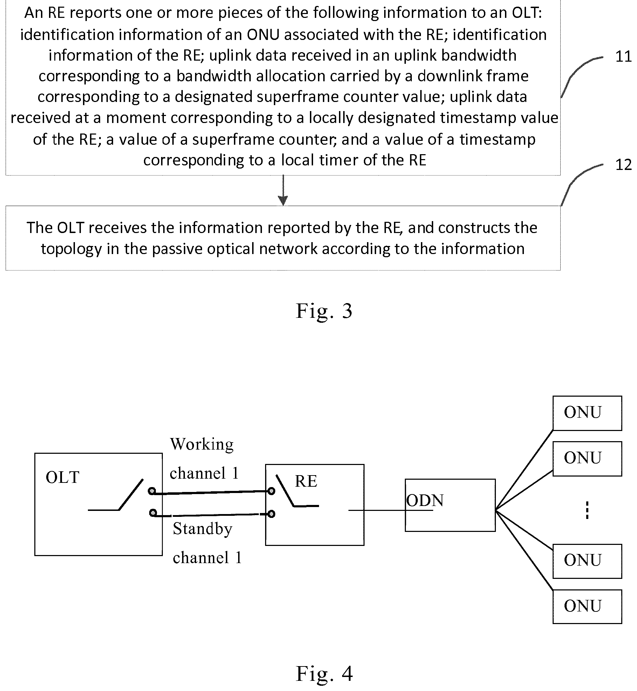

Fig. 3 is a flowchart of a method for constructing a topology in a passive optical network at a reach extender side according to Embodiment 1 of the present disclosure. As shown in Fig. 3, the method includes the following steps 11 to 12.

In step 11, a reach extender (RE) reports one or more pieces of the following information to an optical line terminal: identification information of an optical network unit associated with the reach extender; identification information of the reach extender; uplink data received in an uplink bandwidth corresponding to a bandwidth allocation carried by a downlink frame corresponding to a designated superframe counter value; uplink data received at a moment corresponding to a locally designated timestamp value of the reach extender; a value of a superframe counter; and a value of a timestamp corresponding to a local timer of the reach extender.

In step 12, the optical line terminal receives the information reported by the reach extender, and constructs the topology in the passive optical network according to the information.

The construction of the topology in the passive optical network with the reach extender may be implemented by the method provided by the embodiment of the present disclosure.

Before step 11, the method may include the following steps.

The RE determines the optical network unit (ONU) associated with the RE.

The RE can determine the ONU associated with the RE by the following two manners.

In the first manner, the RE monitors an uplink frame to obtain ONU identification information of the ONU connected to the RE.

In the second manner, the RE monitors a ranging request transmitted by the optical line terminal (OLT) to the ONU, wherein the ranging request carries the ONU identification information of the ONU requiring ranging, and further carries an uplink bandwidth allocated to the ONU to transmit a registration message. The RE records the ONU identification (ONU-ID) information carried in the ranging request if the RE receives the uplink data of the ONU in the uplink bandwidth corresponding to the ranging request.

The RE obtains the ONU identification information of all ONUs connected to the RE by the above manners, and reports the identification information of the RE and the ONU identification information of the ONUs connected to the RE to the OLT through a physical layer operation administration maintenance (PLOAM) message or an optical network unit management and control interface (OMCI, ONU Management and Control Interface) message.

In this embodiment, the RE responds to registration of the OLT; the OLT allocates the RE identification information to the RE; and the RE monitors the uplink frame to obtain the information of the ONU connected to the RE, and reports the information to the OLT. After completing the protection switching by switching an optical fiber, the RE reports the following information to the OLT: information of an associated ONU in the switching. The RE may also report the following information to the OLT: the identification information of the RE, and the serial number of the switched working channel. After receiving the above information, the OLT updates the ranging result of the above associated ONU.

By adopting the method provided by the embodiment of the present disclosure, the optical fiber in the long-distance PON system may be protected without adding a redundant device in the system. In addition, the OLT only updates the ranging result of the ONU connected to the RE whose optical fiber is switched, so that a protection switching time is saved, and the information transmission efficiency of the PON system is improved. Moreover, as the protection switching of the optical fiber may be achieved without adding the redundant device in the system, the protection cost of the system is reduced.

### Embodiment 2

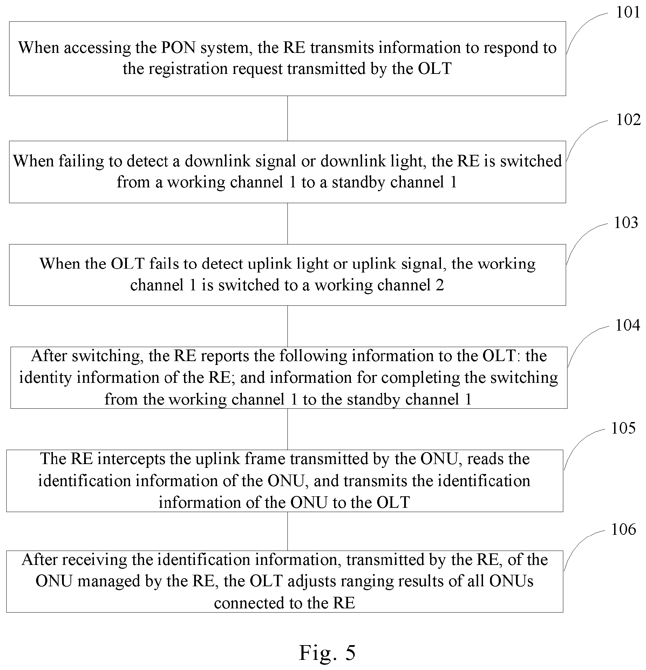

When a coverage range of ONUs required to be managed by the OLT is wider, a reach extender (RE) needs to be added in the PON system, as shown in Fig. 2. A fiber between the OLT and the RE needs to be protected as it is longer. Thus, a redundant fiber between the OLT and the RE needs to be added in the system, as shown in Fig. 4. An optical switch is placed at the OLT, and the OLT may be connected to a main channel 1 through the optical switch, or may be switched to connect to a standby channel 1 through the optical switch. An optical switch is placed at the RE, and the RE may be connected to the main channel 1 through the optical switch, or may be switched to connect to the standby channel 1 through the optical switch. When the fiber of the main channel 1 between the OLT and the RE has a failure, the following main steps are adopted between the OLT and the RE to complete the protection switching. As shown in Fig. 5, the steps are as follows.

In step 101, when accessing the PON system, the RE transmits information to respond to the registration request transmitted by the OLT, and the OLT is informed that the information is transmitted by the RE through the above information. The OLT allocates RE identity information to the RE.

In step 102, when failing to detect a downlink signal or downlink light, the RE is switched from a working channel 1 to a standby channel 1.

In step 103, when the OLT fails to detect uplink light or uplink signal, the working channel 1 is switched to a working channel 2.

In step 104, after switching, the RE reports the following information to the OLT: the identity information of the RE, and information of completing the switching from the working channel 1 to the standby channel 1.

In step 105, the RE monitors the uplink frame transmitted by the ONU, reads the identification information of the ONU, and transmits the identification information of the ONU to the OLT.

In step 106, after receiving the identification information, transmitted by the RE, of the ONU managed by the RE, the OLT adjusts ranging results of all ONUs connected to the RE.

The step 105 in which the RE monitors the uplink frame transmitted by the ONU and reads the identification information of the ONU to obtain information of the ONU associated with the RE may also be implemented by the following manner.

The RE monitors the ranging request transmitted by the OLT to the ONU, wherein the ranging request carries the ONU identification information of the ONU requiring ranging, and further carries an uplink bandwidth allocated to the ONU to transmit a registration message. The RE records the ONU identification (ONU-ID) information carried in the ranging request if the RE receives the uplink data of the ONU in the uplink bandwidth corresponding to the ranging request. The RE obtains the ONU identification information of the all ONUs connected to the RE by the above way, and the RE reports the identification information of the RE and the ONU identification information of the ONUs connected to the RE to the OLT through a physical layer operation administration maintenance (PLOAM) message or an optical network unit management and control interface (OMCI) message.

In the present embodiment, when accessing the PON system, the RE transmits the information to respond to the registration request transmitted by the OLT. The identity information of the RE may be carried in the above information.

### Embodiment 3

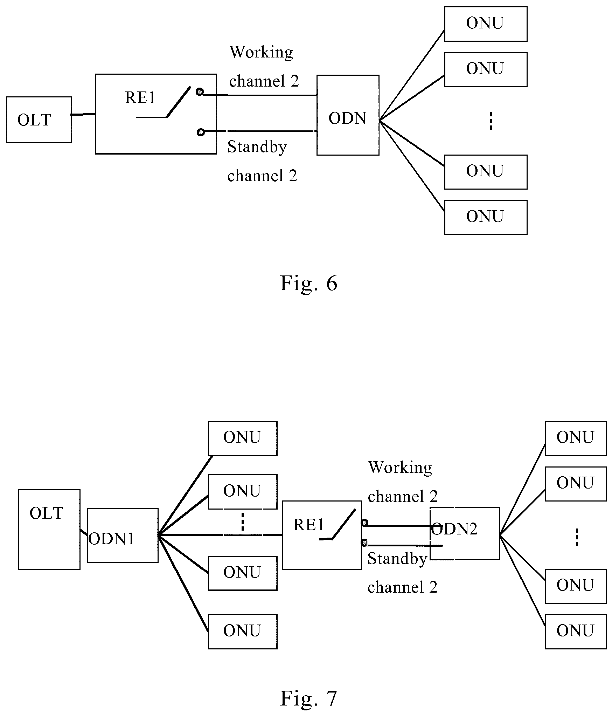

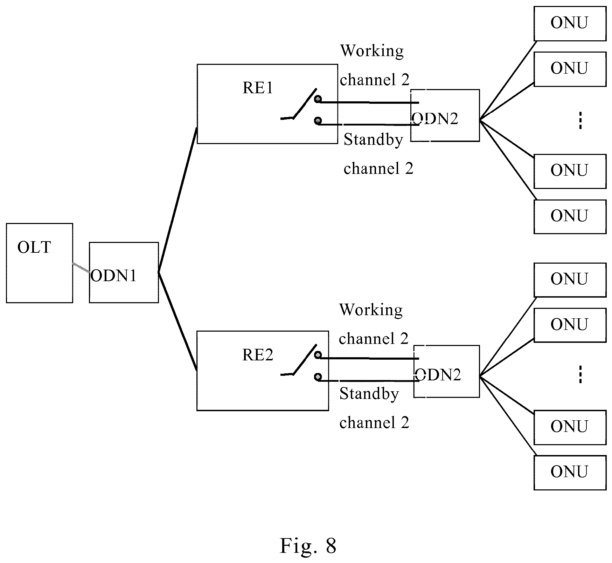

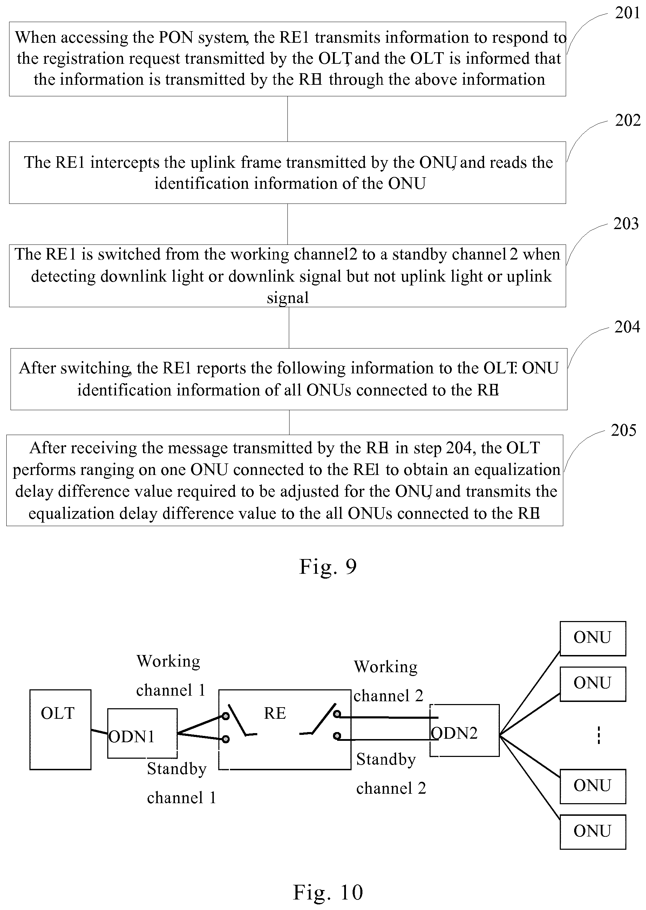

When a coverage range of ONUs required to be managed by the OLT is wider, a reach extender (RE) needs to be added in the PON system, as shown in Fig. 2. A fiber between the RE and an optical splitter needs to be protected as it is longer. Thus, a redundant fiber between the RE and the optical splitter needs to be added in the system, as shown in Figs. 6, 7 and 8. An optical switch is placed at the RE, and the RE may be connected to a main channel 2 through the optical switch, or may be switched to connect to the standby channel 2 through the optical switch. When the fiber of the main channel 2 between the RE1 and the optical splitter has a failure, the following main steps are adopted between the RE1 and the optical splitter to complete the protection switching. As shown in Fig. 9, the steps are as follows.

In step 201, when accessing the PON system, the RE1 transmits information to respond to the registration request transmitted by the OLT, and the OLT is informed that the information is transmitted by the RE1 through the above information. The OLT allocates RE1 identity information to the RE1.

In step 202, the RE1 monitors the uplink frame transmitted by the ONU, and reads the identification information of the ONU. The RE1 stores the ONU identification information of all ONUs connected to RE1.

In step 203, the RE1 is switched from the working channel 2 to a standby channel 2 when detecting downlink light or downlink signal but not uplink light or uplink signal.

In step 204, after switching, the RE1 reports the following information to the OLT: ONU identification information of all ONUs connected to the RE1. Further, the RE1 may simultaneously report the identity information of the RE1 and the information that the RE1 is switched from the working channel 2 to the standby channel 2 to the OLT.

In step 205, after receiving the message transmitted by the RE1 in step 204, the OLT performs ranging on one ONU connected to the RE1 to obtain an equalization delay difference value required to be adjusted for the ONU, and transmits the equalization delay difference value to the all ONUs connected to the RE1.

In the present embodiment, step 203 in the method may also be as follows. The RE1 parses the bandwidth allocation domain in the downlink frame when detecting a downlink signal or downlink light but not an uplink signal or uplink light power. If there is uplink bandwidth for the ONU connected to the RE1 in the downlink frame, and the RE1 fails to detect the uplink light signal or uplink light power within a time period corresponding to the uplink bandwidth, the RE1 is switched from the working channel 2 to the standby channel 2.

In the present embodiment, step 201 in the method may also be as follows. When accessing the PON system, the RE transmits the information to respond to the registration request transmitted by the OLT. The identity information of the RE is carried in the above information.

In the embodiment of the present disclosure, after completing the switching from the working channel 2 to the standby channel 2, the RE1 reports the ONU identification information of the all ONUs connected to the RE1 to the OLT, and the OLT may obtain that only an optical fiber distance between the ONU and the OLT changes after the protection switching, namely, requiring re-ranging, and updates the equalization delay.

The OLT may obtain the loop delay of the ONU on the new working channel by performing ranging on only one ONU. The OLT uses the loop delay of the ONU on an original channel to reduce the loop delay of the new channel so as to obtain the equalization delay difference value required to be updated for the ONU. The all ONUs connected to the RE have experienced the same working channel change, so that the all equalization delay difference values required to be updated for the all ONUs are the same. The OLT transmits the equalization delay difference value to the all ONUs connected to the RE, and the all ONUs perform equalization delay update. The ONU subjected to the equalization delay update and other ONUs in the system may achieve uplink synchronization. Through the above method, the OLT obtains the equalization delay difference value required to be updated for the other ONUs connected to the RE by performing ranging on only one ONU connected to the RE, without changing other ONUs connected in the system, so that the protection switching is accelerated and the impact of re-ranging of the ONU on a system service after protection switching is reduced.

The OLT may also be switched from the working channel 2 to the standby channel 2 on the basis of the RE report, and calculates a change of the ONU loop delay caused by a length difference value ΔL of the optical fibers of the two channels. The change is equal to ΔL/C/n, wherein C is the speed of light, and n is a refractive index of optical wavelength corresponding to a bearer signal in the optical fiber. Thus, the equalization delay value required to be adjusted for the all ONUs connected to the RE is calculated, and the step of ranging one ONU by the OLT may be omitted, so that the protection switching time is further shortened.

### Embodiment 4

When a coverage range of ONUs required to be managed by the OLT is wider, a reach extender needs to be added in the PON system, as shown in Fig. 2. Both a fiber between the OLT and the RE and a fiber between the RE and an optical splitter need to be protected as they are longer. Thus, redundant fibers of the above two fibers need to be added in the system, as shown in Fig. 10. Two optical switches are placed at the RE. The RE may be connected to the main channel 1 through the optical switch 1, or may be switched to connect to the standby channel 1 through the optical switch 1. The RE may be connected to the main channel 2 through the optical switch 2, or may be switched to connect to the standby channel 2 through the optical switch 2. When the fiber of the main channel 1 and/or the main channel 2 has a failure, the following main steps are adopted between the OLT and the RE to complete the protection switching.

In case 1: when the working channel 2 is disconnected, the operation is same as that in Embodiment 2.

In case 2: when the working channel 1 is disconnected, the operation is same as that in Embodiment 1, but step 103 is emitted.

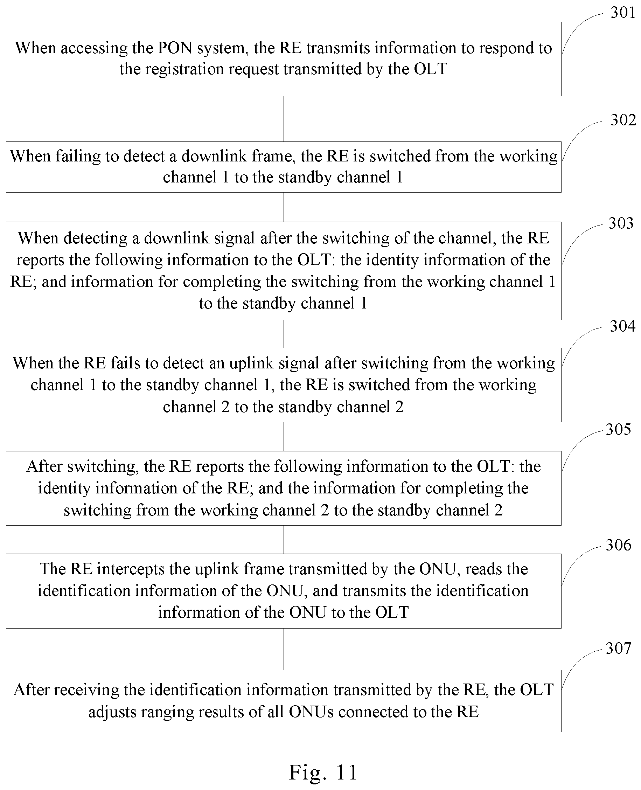

In case 3: when both the working channels 1 and 2 are disconnected, as shown in Fig. 11, the following steps are adopted.

In step 301, when accessing the PON system, the RE transmits information to respond to the registration request transmitted by the OLT, and the OLT is informed that the information is transmitted by the RE through the above information. The OLT allocates RE identity information to the RE.

In step 302, when failing to detect a downlink frame, the RE is switched from the working channel 1 to the standby channel 1.

In step 303, when detecting a downlink signal after the switching of the channel, the RE reports the following information to the OLT: the identity information of the RE, and information of completing the switching from the working channel 1 to the standby channel 1.

In step 304, when the RE fails to detect an uplink signal after switching from the working channel 1 to the standby channel 1, the RE is switched from the working channel 2 to the standby channel 2.

In step 305, after switching, the RE reports the following information to the OLT: the identity information of the RE, and the information of completing the switching from the working channel 2 to the standby channel 2.

In step 306, the RE monitors the uplink frame transmitted by the ONU, reads the identification information of the ONU, and transmits the identification information of the ONU to the OLT.

In step 307, after receiving the identification information transmitted by the RE, the OLT adjusts ranging results of all ONUs connected to the RE.

In the present embodiment, step 303 in the method may also be as follows. The RE parses the bandwidth allocation domain in the downlink frame when failing to detect the uplink signal after switching from the working channel 1 to the standby channel 1. If there is uplink bandwidth for the ONU connected to the RE in the downlink frame, and the RE fails to detect the uplink light signal or uplink light power within a time period corresponding to the uplink bandwidth, the RE is switched from the working channel 2 to the standby channel 2.

In the present embodiment, when accessing the PON system, the RE transmits the information to respond to the registration request transmitted by the OLT. The identity information of the RE may be carried in the above information.

### Embodiment 5

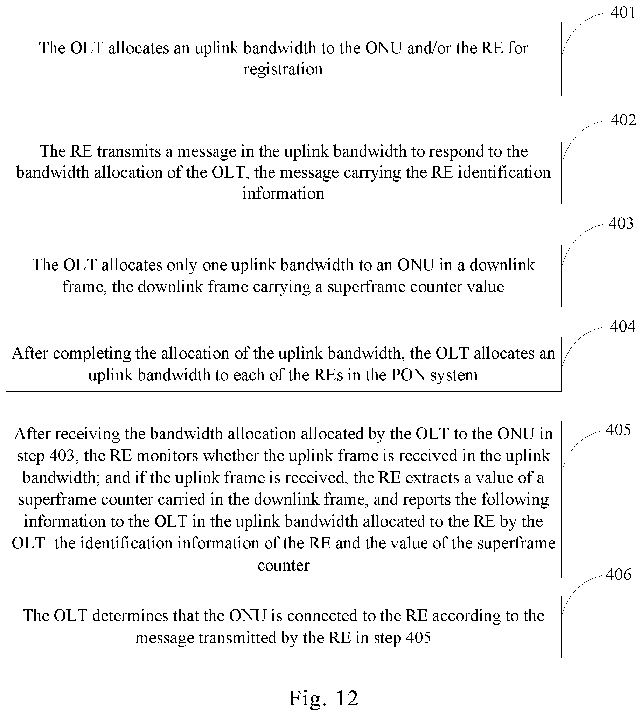

The present embodiment mainly describes how an association relationship between the RE and the ONU is obtained by the OLT and the RE. As shown in Fig. 12, the following steps are included.

In step 401, the OLT allocates an uplink bandwidth to the ONU and/or the RE for registration.

In step 402, the RE transmits a message in the uplink bandwidth to respond to the bandwidth allocation of the OLT in step 401, wherein the message carries the RE identification information.

In step 403, the OLT allocates only one uplink bandwidth to an ONU in a downlink frame, wherein the downlink frame carries a superframe counter value.

In step 404, after completing the allocation of the uplink bandwidth, the OLT allocates an uplink bandwidth to each of the REs in the PON system to enable the RE to report whether the uplink frame is received in the uplink bandwidth allocated to the ONU.

In step 405, after receiving the bandwidth allocation allocated by the OLT to the ONU in step 403, the RE monitors whether the uplink frame is received in the uplink bandwidth. If the uplink frame is received, the RE extracts a value of a superframe counter carried in the downlink frame, and reports the following information to the OLT in the uplink bandwidth allocated to the RE by the OLT in step 404: the identification information of the RE and the value of the superframe counter.

In step 406, the OLT determines that the ONU is connected to the RE according to the message transmitted by the RE in step 405.

Step 405 may also be replaced by the following step.

A local timer of the RE is synchronized with the OLT; after receiving the bandwidth allocation allocated by the OLT to the ONU in step 403, the RE monitors whether the uplink frame is received in the uplink bandwidth; and if the uplink frame is received, the RE records a value of a timestamp corresponding to the current local timer, and reports the following information to the OLT in the uplink bandwidth allocated to the RE by the OLT in step 404: the identification information of the RE and the value of the timestamp corresponding to the current local timer.

In step 403 in this embodiment, the OLT allocates only one uplink bandwidth to the ONU in the downlink frame. The uplink bandwidth may be the ranging bandwidth allocated by the OLT to the ONU, or may be a bandwidth allocated by the OLT to the ONU after an activation flow of the ONU is completed and the ONU enters a working state.

A computer readable storage medium storing a computer executable instruction, which, when executed by a processor, cause the processor to implement the above method for constructing the topology in the passive optical network.

### Embodiment 6

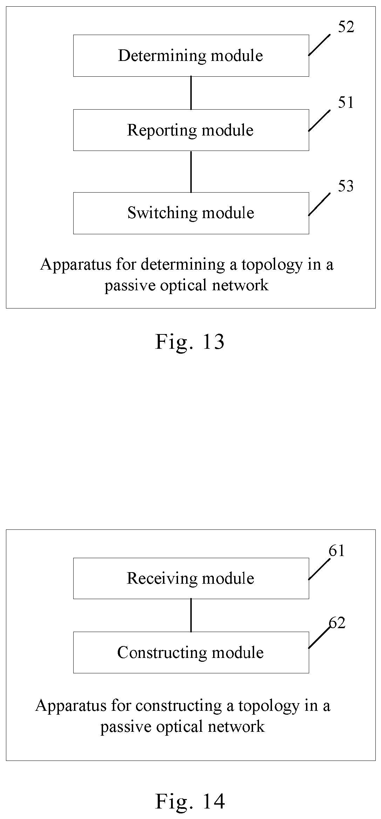

Fig. 13 is a schematic diagram of an apparatus for determining a topology in a passive optical network according to an embodiment of the present disclosure. As shown in Fig. 13, the apparatus in this embodiment includes a reporting module 51.

The reporting module 51 is configured to report one or more pieces of the following information to an optical line terminal: identification information of an optical network unit associated with a reach extender; identification information of the reach extender; uplink data received in an uplink bandwidth corresponding to a bandwidth allocation carried by a downlink frame corresponding to a designated superframe counter value; uplink data received at a moment corresponding to a locally designated timestamp value of the reach extender; a value of a superframe counter; and a value of a timestamp corresponding to a local timer of the reach extender.

In an embodiment, the apparatus further includes a determining module 52.

The determining module 52 is configured to: before the reporting module reports the identification information of the optical network unit associated with the reach extender to the optical line terminal, determine the optical network unit associated with the reach extender.

In an embodiment, the determining module 52 is configured to determine the optical network unit associated with the reach extender by the following manners: monitoring an uplink frame transmitted by the optical network unit, and reading the identification information of the optical network unit; or monitoring a ranging request message transmitted by the optical line terminal to the optical network unit, the ranging request message carrying identification information of an optical network unit to be ranged and an uplink bandwidth allocated to the optical network unit to transmit a registration message; and recording the identification information of the optical network unit carried in the ranging request message if the reach extender receives the uplink data of the optical network unit in the uplink bandwidth.

In an embodiment, the reporting module 51 is configured to report the identification information of the reach extender and the identification information of the optical network unit associated with the reach extender to the optical line terminal through a physical layer operation administration maintenance message or an optical network unit management and control interface message.

In an embodiment, the apparatus may further include a switching module 53.

The switching module 53 is configured to switch a working channel to a standby channel when at least one of a downlink signal and an uplink signal is not detected.

The reporting module 51 is configured to report the identification information of the optical network unit associated with the reach extender to the optical line terminal after the switching module 53 switches the working channel to the standby channel.

In an embodiment, the switching module 53 is configured to parse a bandwidth allocation domain in the downlink frame when the downlink signal is detected but the uplink signal is not detected, and switch the working channel to the standby channel if an uplink bandwidth allocated to the optical network unit connected to the reach extender exists in the downlink frame and no uplink signal is detected within a time period corresponding to the uplink bandwidth.

In an embodiment, the switching module 53 is further configured to transmit a switching message to the optical line terminal after the working channel is switched to the standby channel, the switching message carrying the following information: identity information of the reach extender and information of completing the switching from the working channel to the standby channel.

In an embodiment, the apparatus further includes a registering module.

The registering module is configured to: when accessing the passive optical network, receive a registration request of the optical line terminal, and return a registration response message to the optical line terminal. The registration response message carries at least one piece of the following information: the identification information of the reach extender, port information of the reach extender, information of whether the reach extender is equipped with a protection interface, position information of the reach extender, port transmission power information of the reach extender, and identification information of the passive optical network of the optical line terminal to which the reach extender is connected.

In an embodiment, the apparatus may further include a receiving module.

The receiving module is configured to receive an uplink bandwidth allocated by the optical line terminal, the uplink bandwidth being used for reporting whether an uplink frame is received in the uplink bandwidth allocated to the optical network unit.

In an embodiment, the apparatus may further include a processing module.

The processing module is configured to: if the uplink frame is received in the uplink bandwidth, extract a value of a superframe counter carried in the downlink frame, or record a value of a timestamp corresponding to a current local timer.

The reporting module 51 is configured to report the identification information of the reach extender and the value of the superframe counter to the optical line terminal in the uplink bandwidth, or report the identification information of the reach extender and the value of the timestamp corresponding to the local timer of the reach extender to the optical line terminal in the uplink bandwidth.

An embodiment of the present disclosure further provides a reach extender, including the apparatus for determining the topology in the passive optical network.

An embodiment of the present disclosure further provides an apparatus for determining a topology in a passive optical network. The apparatus includes a memory and a processor.

The memory stores the following instructions, which, when executed, implement the following step: reporting one or more pieces of the following information to an optical line terminal: identification information of an optical network unit associated with the reach extender, identification information of the reach extender, uplink data received in an uplink bandwidth corresponding to a bandwidth allocation carried by a downlink frame corresponding to a designated superframe counter value, uplink data received at a moment corresponding to a locally designated timestamp value of the reach extender, a value of a superframe counter, and a value of a timestamp corresponding to a local timer of the reach extender.

The processor is configured to execute the instructions stored in the memory.

### Embodiment 7

Fig. 14 is a schematic diagram of an apparatus for constructing a topology in a passive optical network according to an embodiment of the present disclosure. As shown in Fig. 14, the apparatus in this embodiment includes a receiving module 61 and a constructing module 62.

The receiving module 61 is configured to receive one or more pieces of the following information reported by a reach extender: identification information of an optical network unit associated with the reach extender, identification information of the reach extender, uplink data received in an uplink bandwidth corresponding to a bandwidth allocation carried by a downlink frame corresponding to a designated superframe counter value, uplink data received at a moment corresponding to a locally designated timestamp value of the reach extender, a value of a superframe counter, and a value of a timestamp corresponding to a local timer of the reach extender.

A constructing module 62 is configured to construct the topology in the passive optical network according to the information.

In an embodiment, the apparatus may further include a registering module and an allocating module.

The registering module is configured to, when the reach extender accesses the passive optical network, transmit a registration request to the reach extender.

The allocating module is configured to allocate identity information to the reach extender.

In an embodiment, the allocating module may be further configured to: allocate only one uplink bandwidth to an optical network unit in a downlink frame, the downlink frame carrying a superframe counter value; and allocate one uplink bandwidth to each of reach extenders in the passive optical network system to enable the reach extender to report whether the uplink frame is received in the uplink bandwidth allocated to the optical network unit.

In an embodiment, the apparatus may further include an adjusting module.

The adjusting module is configured to adjust ranging results of the optical network units connected to the reach extender by the following steps, including: ranging one optical network unit connected to the reach extender to obtain an equalization delay difference value required to be adjusted for the optical network unit; transmitting the equalization delay difference value to the all optical network units connected to the reach extender, or receiving a switching message of the reach extender, the switching message carrying the following information: identity information of the reach extender and information of completing the switching from a working channel to a standby channel; and determining an equalization delay value required to be adjusted for the all optical network units connected to the reach extender according to a length difference value between optical fibers of the working channel and the standby channel, and transmitting the equalization delay difference value to the all optical network units connected to the reach extender.

An embodiment of the present disclosure further provides an optical line terminal including the above apparatus for constructing the topology in the passive optical network in Embodiment 7.

An embodiment of the present disclosure further provides an apparatus for constructing a topology in a passive optical network. The apparatus includes a memory and a processor.

The memory stores the following instructions, which, when executed, implement the following steps: receiving one or more pieces of the following information reported by a reach extender: identification information of an optical network unit associated with the reach extender, identification information of the reach extender, uplink data received in an uplink bandwidth corresponding to a bandwidth allocation carried by a downlink frame corresponding to a designated superframe counter value, uplink data received at a moment corresponding to a locally designated timestamp value of the reach extender, a value of a superframe counter, and a value of a timestamp corresponding to a local timer of the reach extender; and constructing the topology in the passive optical network according to the information.

The processor is configured to execute the instructions stored in the memory.

It should be understood by those skilled in the art that, all or part of the steps in the above method may be implemented through programs that give instructions to respective hardware. The programs may be stored in a computer readable storage medium which may be a read only memory, a magnetic disk or an optical disk. All or part of the steps of the above embodiments may also be implemented by using one or more integrated circuits. Correspondingly, each module/unit in the above embodiments may be implemented in the form of hardware or in the form of a software function module. The embodiments of the present disclosure are not limited to the combination of any specific hardware and software.

The foregoing embodiments are only specific embodiments of the present disclosure. The scope of protection is defined by the appended claims.

### Industrial Applicability

By adopting the embodiments of the present disclosure, the optical fiber in the long-distance PON system can be protected without adding a redundant device in the system. In addition, the OLT only updates the ranging result of the ONU in the RE whose optical fiber is switched, so that a protection switching time is saved, and the information transmission efficiency of the PON system is improved. Moreover, as the protection switching of the optical fiber can be achieved without adding the redundant device in the system, the protection cost of the system is reduced.

## Claims

1. A method for determining a topology in a passive optical network comprising an optical line terminal, a reach extender and a plurality of optical network units, wherein the method comprises:
determining, by the reach extender, optical network units associated with the reach extender; and
reporting, by the reach extender, the following information to the optical line terminal to allow the optical line terminal to determine the topology in the passive optical network according to the reported information:
identification information of the optical network units associated with the reach extender; and
identification information of the reach extender,
wherein determining, by the reach extender, the optical network units associated with the reach extender is implemented by the following manner:
monitoring, by the reach extender, a ranging request message transmitted by the optical line terminal to any one of the optical network units, the ranging request message carrying identification information of the optical network unit to be ranged and an uplink bandwidth allocated to the optical network unit to transmit a registration message; and recording the identification information of the optical network unit carried in the ranging request message if the reach extender receives the uplink data of the optical network unit in the uplink bandwidth.

2. The method of claim 1, wherein
the reach extender reports the identification information of the optical network unit associated with the reach extender to the optical line terminal when the reach extender fails to detect at least one of a downlink signal and an uplink signal and is switched from a working channel to a standby channel.

3. The method of claim 2, wherein switching from the working channel to the standby channel when the reach extender fails to detect at least one of the downlink signal and the uplink signal comprises:
parsing a bandwidth allocation domain in the downlink frame when the reach extender detects the downlink signal but not the uplink signal, and switching from the working channel to the standby channel if an uplink bandwidth allocated to the optical network unit connected to the reach extender exists in the downlink frame and no uplink signal is detected within a time period corresponding to the uplink bandwidth.

4. The method of claim 1, wherein before reporting, by the reach extender, the information to the optical line terminal, the method further comprises:
when the reach extender accesses the passive optical network, receiving, by the reach extender, a registration request of the optical line terminal; and returning, by the reach extender, a registration response message to the optical line terminal, wherein
the registration response message carries at least one piece of the following information: the identification information of the reach extender, port information of the reach extender, information of whether the reach extender is equipped with a protection interface, position information of the reach extender, port transmission power information of the reach extender, and identification information of the passive optical network of the optical line terminal to which the reach extender is connected.

5. The method of claim 4, wherein after returning, by the reach extender, the registration response message to the optical line terminal, the method further comprises:
receiving, by the reach extender, an uplink bandwidth allocated by the optical line terminal, the uplink bandwidth being used for reporting whether an uplink frame is received in the uplink bandwidth allocated to the optical network unit.

6. The method of claim 5, wherein after receiving, by the reach extender, the uplink bandwidth allocated by the optical line terminal, the method further comprises:
if the reach extender receives the uplink frame in the uplink bandwidth, extracting a value of a superframe counter carried in the downlink frame or recording a value of a timestamp corresponding to a current local timer, and reporting the identification information of the reach extender and the value of the superframe counter to the optical line terminal in the uplink bandwidth; or reporting the identification information of the reach extender and the value of the timestamp corresponding to the local timer of the reach extender to the optical line terminal in the uplink bandwidth.

7. An apparatus for determining a topology in a passive optical network comprising an optical line terminal, a reach extender and a plurality of optical network units, wherein the apparatus is arranged in the reach extender, and comprises:
a determining module (52) configured to determine optical network units associated with the reach extender; and
a reporting module (51) configured to report the following information to the optical line terminal to allow the optical line terminal to determine the topology in the passive optical network according to the reported information: identification information of the optical network units associated with the reach extender; and identification information of the reach extender,
wherein the determining module (52) is configured to determine the optical network units associated with the reach extender by the following manners:
monitoring a ranging request message transmitted by the optical line terminal to any one of the optical network units, the ranging request message carrying identification information of the optical network unit to be ranged and an uplink bandwidth allocated to the optical network unit to transmit a registration message; and recording the identification information of the optical network unit carried in the ranging request message if the reach extender receives the uplink data of the optical network unit in the uplink bandwidth.

8. A method for determining a topology in a passive optical network comprising an optical line terminal, a reach extender and a plurality of optical network units, wherein the method comprises:
receiving, by the optical line terminal, the following information reported by the reach extender: identification information of all optical network units connected to the reach extender, and identification information of the reach extender, wherein the identification information of the optical network units is obtained by the reach extender during ranging; and
determining, by the optical line terminal, the topology in the passive optical network according to the received information.

9. The method of claim 8, wherein before receiving, by the optical line terminal, the information reported by the reach extender, the method further comprises:
when the reach extender accesses the passive optical network, transmitting, by the optical line terminal, a registration request to the reach extender, and allocating identity information to the reach extender.

10. The method of claim 9, wherein before receiving, by the optical line terminal, the information reported by the reach extender, the method further comprises:
allocating, by the optical line terminal, only one uplink bandwidth to an optical network unit in a downlink frame, the downlink frame carrying a superframe counter value; and
allocating, by the optical line terminal, one uplink bandwidth to each of reach extenders in the passive optical network system to enable the reach extender to report whether the uplink frame is received in the uplink bandwidth allocated to the optical network unit.

11. The method of claim 8, wherein after determining, by the optical line terminal, the topology in the passive optical network according to the information, the method further comprises:
adjusting, by the optical line terminal, a ranging result of an optical network unit connected to the reach extender.

12. The method of claim 11, wherein adjusting, by the optical line terminal, the ranging result of the optical network unit connected to the reach extender comprises:
ranging, by the optical line terminal, the optical network unit connected to the reach extender to obtain an equalization delay difference value required to be adjusted for the optical network unit; and transmitting, by the optical line terminal, the equalization delay difference value to all optical network units connected to the reach extender, or
receiving, by the optical line terminal, a switching message of the reach extender, the switching message carrying the following information: identity information of the reach extender and information of completing the switching from a working channel to a standby channel; and determining, by the optical line terminal, an equalization delay value required to be adjusted for the all optical network units connected to the reach extender according to a length difference value between optical fibers of the working channel and the standby channel, and transmitting the equalization delay difference value to the all optical network units connected to the reach extender.

13. An apparatus for determining a topology in a passive optical network comprising an optical line terminal, a reach extender and a plurality of optical network units, the apparatus is arranged in the optical line terminal, and comprising:
a receiving module (61) configured to receive the following information reported by the reach extender: identification information of optical network units associated with the reach extender, and identification information of the reach extender; and
a constructing module (62) configured to determine the topology in the passive optical network according to the received information.

## Patentansprüche

1. Verfahren zum Bestimmen einer Topologie in einem passiven optischen Netzwerk, das ein optisches Leitungsendgerät, einen Reichweitenerweiterer und eine Vielzahl von optischen Netzwerkeinheiten umfasst, wobei das Verfahren umfasst:
Bestimmen, durch den Reichweitenerweiterer, von optischen Netzwerkeinheiten, die dem Reichweitenerweiterer zugeordnet sind; und
Berichten, durch den Reichweitenerweiterer, der folgenden Informationen an das optische Leitungsendgerät, um dem optischen Leitungsendgerät zu erlauben, die Topologie in dem passiven optischen Netzwerk gemäß den berichteten Informationen zu bestimmen:
Identifikationsinformationen der optischen Netzwerkeinheiten, die dem Reichweitenerweiterer zugeordnet sind; und
Identifikationsinformationen des Reichweitenerweiterers,
wobei das Bestimmen, durch den Reichweitenerweiterer, der optischen Netzwerkeinheiten, die dem Reichweitenerweiterer zugeordnet sind, auf die folgende Weise implementiert wird:
Überwachen, durch den Reichweitenerweiterer, einer Reichweitenanforderungsnachricht, die durch das optische Leitungsendgerät an eine der optischen Netzwerkeinheiten übertragen wird, wobei die Reichweitenanforderungsnachricht Identifikationsinformationen der zu reichweitenden optischen Netzwerkeinheit und eine Uplink-Bandbreite, die der optischen Netzwerkeinheit zum Übertragen einer Registrierungsnachricht zugewiesen ist, trägt; und Aufzeichnen der Identifikationsinformationen der optischen Netzwerkeinheit, die in der Reichweitenanforderungsnachricht getragen werden, wenn der Reichweitenerweiterer die Uplink-Daten der optischen Netzwerkeinheit in der Uplink-Bandbreite empfängt.

2. Verfahren nach Anspruch 1, wobei
der Reichweitenerweiterer die Identifikationsinformationen der optischen Netzwerkeinheit, die dem Reichweitenerweiterer zugeordnet sind, an das optische Leitungsendgerät berichtet, wenn der Reichweitenerweiterer ein Downlink-Signal und/oder ein Uplink-Signal nicht detektieren kann und von einem Arbeitskanal auf einen Bereitschaftskanal geschaltet wird.

3. Verfahren nach Anspruch 2, wobei das Schalten von dem Arbeitskanal auf den Bereitschaftskanal, wenn der Reichweitenerweiterer das Downlink-Signal und/oder das Uplink-Signal nicht detektieren kann, Folgendes umfasst:
Parsen einer Bandbreitenzuweisungsdomäne in dem Downlink-Rahmen, wenn der Reichweitenerweiterer das Downlink-Signal, aber nicht das Uplink-Signal detektiert, und Schalten von dem Arbeitskanal auf den Bereitschaftskanal, wenn eine Uplink-Bandbreite, die der optischen Netzwerkeinheit zugewiesen ist, die mit dem Reichweitenerweiterer verbunden ist, in dem Downlink-Rahmen vorhanden ist und kein Uplink-Signal innerhalb eines Zeitraums detektiert wird, der der Uplink-Bandbreite entspricht.

4. Verfahren nach Anspruch 1, wobei das Verfahren vor dem Berichten, durch den Reichweitenerweiterer, der Informationen an das optische Leitungsendgerät ferner Folgendes umfasst:
wenn der Reichweitenerweiterer auf das passive optische Netzwerk zugreift, Empfangen, durch den Reichweitenerweiterer, einer Registrierungsanforderung des optischen Leitungsendgeräts; und Zurückgeben, durch den Reichweitenerweiterer, einer Registrierungsantwortnachricht an das optische Leitungsendgerät, wobei
die Registrierungsantwortnachricht mindestens einen Teil der folgenden Informationen trägt: die Identifikationsinformationen des Reichweitenerweiterers, Anschlussinformationen des Reichweitenerweiterers, Informationen darüber, ob der Reichweitenerweiterer mit einer Schutzschnittstelle ausgestattet ist, Positionsinformationen des Reichweitenerweiterers, Anschlussübertragungsleistungsinformationen des Reichweitenerweiterers und Identifikationsinformationen des passiven optischen Netzwerks des optischen Leitungsendgeräts, mit dem der Reichweitenerweiterer verbunden ist.

5. Verfahren nach Anspruch 4, wobei das Verfahren nach dem Zurückgeben, durch den Reichweitenerweiterer, der Registrierungsantwortnachricht an das optische Leitungsendgerät ferner Folgendes umfasst:
Empfangen, durch den Reichweitenerweiterer, einer Uplink-Bandbreite, die durch das optische Leitungsendgerät zugewiesen ist, wobei die Uplink-Bandbreite zum Berichten verwendet wird, ob ein Uplink-Rahmen in der Uplink-Bandbreite empfangen wird, die der optischen Netzwerkeinheit zugewiesen ist.

6. Verfahren nach Anspruch 5, wobei das Verfahren nach dem Empfangen, durch den Reichweitenerweiterer, der Uplink-Bandbreite, die durch das optische Leitungsendgerät zugewiesen ist, ferner Folgendes umfasst:
wenn der Reichweitenerweiterer den Uplink-Rahmen in der Uplink-Bandbreite empfängt, Extrahieren eines Werts eines Superrahmenzählers, der in dem Downlink-Rahmen getragen wird, oder Aufzeichnen eines Werts eines Zeitstempels, der einem aktuellen lokalen Zeitgeber entspricht, und Berichten der Identifikationsinformationen des Reichweitenerweiterers und des Werts des Superrahmenzählers an das optische Leitungsendgerät in der Uplink-Bandbreite; oder Berichten der Identifikationsinformationen des Reichweitenerweiterers und des Werts des Zeitstempels, der dem lokalen Zeitgeber des Reichweitenerweiterers entspricht, an das optische Leitungsendgerät in der Uplink-Bandbreite.

7. Vorrichtung zum Bestimmen einer Topologie in einem passiven optischen Netzwerk, das ein optisches Leitungsendgerät, einen Reichweitenerweiterer und eine Vielzahl von optischen Netzwerkeinheiten umfasst, wobei die Vorrichtung in dem Reichweitenerweiterer angeordnet ist und Folgendes umfasst:
ein Bestimmungsmodul (52), das konfiguriert ist, um optische Netzwerkeinheiten zu bestimmen, die dem Reichweitenerweiterer zugeordnet sind; und
ein Berichtsmodul (51), das konfiguriert ist, um die folgenden Informationen an das optische Leitungsendgerät zu berichten, um dem optischen Leitungsendgerät zu erlauben, die Topologie in dem passiven optischen Netzwerk gemäß den berichteten Informationen zu bestimmen: Identifikationsinformationen der optischen Netzwerkeinheiten, die dem Reichweitenerweiterer zugeordnet sind; und Identifikationsinformationen des Reichweitenerweiterers,
wobei das Bestimmungsmodul (52) konfiguriert ist, um die optischen Netzwerkeinheiten, die dem Reichweitenerweiterer zugeordnet sind, auf die folgenden Weisen zu bestimmen:
Überwachen einer Reichweitenanforderungsnachricht, die durch das optische Leitungsendgerät an eine der optischen Netzwerkeinheiten übertragen wird, wobei die Reichweitenanforderungsnachricht Identifikationsinformationen der zu reichweitenden optischen Netzwerkeinheit und eine Uplink-Bandbreite, die der optischen Netzwerkeinheit zum Übertragen einer Registrierungsnachricht zugewiesen ist, trägt; und Aufzeichnen der Identifikationsinformationen der optischen Netzwerkeinheit, die in der Reichweitenanforderungsnachricht getragen werden, wenn der Reichweitenerweiterer die Uplink-Daten der optischen Netzwerkeinheit in der Uplink-Bandbreite empfängt.

8. Verfahren zum Bestimmen einer Topologie in einem passiven optischen Netzwerk, das ein optisches Leitungsendgerät, einen Reichweitenerweiterer und eine Vielzahl von optischen Netzwerkeinheiten umfasst, wobei das Verfahren umfasst:
Empfangen, durch das optische Leitungsendgerät, der folgenden Informationen, die durch den Reichweitenerweiterer berichtet werden: Identifikationsinformationen aller optischen Netzwerkeinheiten, die mit dem Reichweitenerweiterer verbunden sind, und Identifikationsinformationen des Reichweitenerweiterers, wobei die Identifikationsinformationen der optischen Netzwerkeinheiten durch den Reichweitenerweiterer während der Reichweite erhalten werden; und
Bestimmen, durch das optische Leitungsendgerät, der Topologie in dem passiven optischen Netzwerk gemäß den empfangenen Informationen.

9. Verfahren nach Anspruch 8, wobei das Verfahren vor dem Empfangen, durch das optische Leitungsendgerät, der Informationen, die durch den Reichweitenerweiterer berichtet werden, ferner Folgendes umfasst:
wenn der Reichweitenerweiterer auf das passive optische Netzwerk zugreift, Übertragen, durch das optische Leitungsendgerät, einer Registrierungsanforderung an den Reichweitenerweiterer und Zuweisen von Identitätsinformationen an den Reichweitenerweiterer.

10. Verfahren nach Anspruch 9, wobei das Verfahren vor dem Empfangen, durch das optische Leitungsendgerät, der Informationen, die durch den Reichweitenerweiterer berichtet werden, ferner Folgendes umfasst:
Zuweisen, durch das optische Leitungsendgerät, nur einer Uplink-Bandbreite an eine optische Netzwerkeinheit in einem Downlink-Rahmen, wobei der Downlink-Rahmen einen Superrahmenzählerwert trägt; und
Zuweisen, durch das optische Leitungsendgerät, einer Uplink-Bandbreite an jeden der Reichweitenerweiterer in dem passiven optischen Netzwerksystem, um dem Reichweitenerweiterer zu ermöglichen, zu berichten, ob der Uplink-Rahmen in der Uplink-Bandbreite empfangen wird, die der optischen Netzwerkeinheit zugewiesen ist.

11. Verfahren nach Anspruch 8, wobei das Verfahren nach dem Bestimmen, durch das optische Leitungsendgerät, der Topologie in dem passiven optischen Netzwerk gemäß den Informationen ferner Folgendes umfasst:
Anpassen, durch das optische Leitungsendgerät, eines Reichweitenergebnisses einer optischen Netzwerkeinheit, die mit dem Reichweitenerweiterer verbunden ist.

12. Verfahren nach Anspruch 11, wobei das Anpassen, durch das optische Leitungsendgerät, des Reichweitenergebnisses der optischen Netzwerkeinheit, die mit dem Reichweitenerweiterer verbunden ist, Folgendes umfasst:
Reichweiten, durch das optische Leitungsendgerät, der optischen Netzwerkeinheit, die mit dem Reichweitenerweiterer verbunden ist, um einen Ausgleichsverzögerungsdifferenzwert zu erhalten, der erforderlich ist, um für die optische Netzwerkeinheit angepasst zu werden; und Übertragen, durch das optische Leitungsendgerät, des Ausgleichsverzögerungsdifferenzwerts an alle optischen Netzwerkeinheiten, die mit dem Reichweitenerweiterer verbunden sind, oder
Empfangen, durch das optische Leitungsendgerät, einer Schaltnachricht des Reichweitenerweiterers, wobei die Schaltnachricht die folgenden Informationen trägt: Identitätsinformationen des Reichweitenerweiterers und Informationen zum Vervollständigen des Schaltens von einem Arbeitskanal auf einen Bereitschaftskanal; und Bestimmen, durch das optische Leitungsendgerät, eines Ausgleichsverzögerungswerts, der erforderlich ist, um für alle optischen Netzwerkeinheiten, die mit dem Reichweitenerweiterer verbunden sind, gemäß einem Längendifferenzwert zwischen optischen Fasern des Arbeitskanals und des Bereitschaftskanals angepasst zu werden, und Übertragen des Ausgleichsverzögerungsdifferenzwerts an alle optischen Netzwerkeinheiten, die mit dem Reichweitenerweiterer verbunden sind.

13. Vorrichtung zum Bestimmen einer Topologie in einem passiven optischen Netzwerk, das ein optisches Leitungsendgerät, einen Reichweitenerweiterer und eine Vielzahl von optischen Netzwerkeinheiten umfasst, wobei die Vorrichtung in dem optischen Leitungsendgerät angeordnet ist und Folgendes umfasst:
ein Empfangsmodul (61), das konfiguriert ist, um die folgenden Informationen, die durch den Reichweitenerweiterer berichtet werden, zu empfangen: Identifikationsinformationen von optischen Netzwerkeinheiten, die dem Reichweitenerweiterer zugeordnet sind, und Identifikationsinformationen des Reichweitenerweiterers, und
ein Konstruktionsmodul (62), das konfiguriert ist, um die Topologie in dem passiven optischen Netzwerk gemäß den empfangenen Informationen zu bestimmen.

## Revendications

1. Procédé pour déterminer une topologie dans un réseau optique passif comprenant un terminal de ligne optique, un extenseur de portée et une pluralité d'unités de réseau optique, dans lequel le procédé comprend les étapes consistant à :
déterminer, par l'extenseur de portée, des unités de réseau optique associées à l'extenseur de portée ; et
rapporter, par l'extenseur de portée, les informations suivantes au terminal de ligne optique pour permettre au terminal de ligne optique de déterminer la topologie dans le réseau optique passif selon les informations rapportées :
des informations d'identification des unités de réseau optique associées à l'extenseur de portée ; et
des informations d'identification de l'extenseur de portée,
dans lequel déterminer, par l'extenseur de portée, les unités de réseau optique associées à l'extenseur de portée est mis en œuvre de la manière suivante :
surveiller, par l'extenseur de portée, un message de demande de mesure de distance envoyé par le terminal de ligne optique à l'une quelconque des unités de réseau optique, le message de demande de mesure de distance transportant des informations d'identification de l'unité de réseau optique à mesurer de distance et une largeur de bande de liaison montante attribuée à l'unité de réseau optique pour envoyer un message d'enregistrement ; et enregistrer les informations d'identification de l'unité de réseau optique transportées dans le message de demande de mesure de distance si l'extenseur de portée reçoit les données de liaison montante de l'unité de réseau optique dans la largeur de bande de liaison montante.

2. Procédé selon la revendication 1, dans lequel
l'extenseur de portée rapporte les informations d'identification de l'unité de réseau optique associée à l'extenseur de portée au terminal de ligne optique lorsque l'extenseur de portée ne parvient pas à détecter au moins l'un d'un signal de liaison descendante et d'un signal de liaison montante et est commuté d'un canal de travail à un canal de secours.

3. Procédé selon la revendication 2, dans lequel commuter du canal de travail au canal de secours lorsque l'extenseur de portée ne parvient pas à détecter au moins l'un du signal de liaison descendante et du signal de liaison montante comprend :
analyser syntaxiquement un domaine d'attribution de largeur de bande dans la trame de liaison descendante lorsque l'extenseur de portée détecte le signal de liaison descendante mais pas le signal de liaison montante, et commuter du canal de travail au canal de secours si une largeur de bande de liaison montante attribuée à l'unité de réseau optique connectée à l'extenseur de portée existe dans la trame de liaison descendante et aucun signal de liaison montante n'est détecté dans une période de temps correspondant à la largeur de bande de liaison montante.

4. Procédé selon la revendication 1, dans lequel avant de rapporter, par l'extenseur de portée, les informations au terminal de ligne optique, le procédé comprend en outre les étapes consistant à :
lorsque l'extenseur de portée accède au réseau optique passif, recevoir, par l'extenseur de portée, une demande d'enregistrement du terminal de ligne optique ; et renvoyer, par l'extenseur de portée, un message de réponse d'enregistrement au terminal de ligne optique, dans lequel
le message de réponse d'enregistrement transporte au moins un élément des informations suivantes : les informations d'identification de l'extenseur de portée, des informations de port de l'extenseur de portée, des informations indiquant si l'extenseur de portée est équipé d'une interface de protection, des informations de position de l'extenseur de portée, des informations de puissance d'émission de port de l'extenseur de portée, et des informations d'identification du réseau optique passif du terminal de ligne optique auquel l'extenseur de portée est connecté.

5. Procédé selon la revendication 4, dans lequel après avoir renvoyé, par l'extenseur de portée, le message de réponse d'enregistrement au terminal de ligne optique, le procédé comprend en outre les étapes consistant à :
recevoir, par l'extenseur de portée, une largeur de bande de liaison montante attribuée par le terminal de ligne optique, la largeur de bande de liaison montante étant utilisée pour rapporter si une trame de liaison montante est reçue dans la largeur de bande de liaison montante attribuée à l'unité de réseau optique.

6. Procédé selon la revendication 5, dans lequel après avoir reçu, par l'extenseur de portée, la largeur de bande de liaison montante attribuée par le terminal de ligne optique, le procédé comprend en outre les étapes consistant à :
si l'extenseur de portée reçoit la trame de liaison montante dans la largeur de bande de liaison montante, extraire une valeur d'un compteur de supertrames transporté dans la trame de liaison descendante ou enregistrer une valeur d'une estampille temporelle correspondant à un temporisateur local actuel, et rapporter les informations d'identification de l'extenseur de portée et la valeur du compteur de supertrames au terminal de ligne optique dans la largeur de bande de liaison montante ; ou rapporter les informations d'identification de l'extenseur de portée et la valeur de l'estampille temporelle correspondant au temporisateur local de l'extenseur de portée au terminal de ligne optique dans la largeur de bande de liaison montante.

7. Appareil pour déterminer une topologie dans un réseau optique passif comprenant un terminal de ligne optique, un extenseur de portée et une pluralité d'unités de réseau optique, dans lequel l'appareil est agencé dans l'extenseur de portée, et comprend :
un module de détermination (52) configuré pour déterminer des unités de réseau optique associées à l'extenseur de portée ; et
un module de rapport (51) configuré pour rapporter les informations suivantes au terminal de ligne optique pour permettre au terminal de ligne optique de déterminer la topologie dans le réseau optique passif selon les informations rapportées : des informations d'identification des unités de réseau optique associées à l'extenseur de portée ; et des informations d'identification de l'extenseur de portée,
dans lequel le module de détermination (52) est configuré pour déterminer les unités de réseau optique associées à l'extenseur de portée par les manières suivantes :
surveiller un message de demande de mesure de distance envoyé par le terminal de ligne optique à l'une quelconque des unités de réseau optique, le message de demande de mesure de distance transportant des informations d'identification de l'unité de réseau optique à mesurer de distance et une largeur de bande de liaison montante attribuée à l'unité de réseau optique pour envoyer un message d'enregistrement ; et enregistrer les informations d'identification de l'unité de réseau optique transportées dans le message de demande de mesure de distance si l'extenseur de portée reçoit les données de liaison montante de l'unité de réseau optique dans la largeur de bande de liaison montante.

8. Procédé pour déterminer une topologie dans un réseau optique passif comprenant un terminal de ligne optique, un extenseur de portée et une pluralité d'unités de réseau optique, dans lequel le procédé comprend les étapes consistant à :
recevoir, par le terminal de ligne optique, les informations suivantes rapportées par l'extenseur de portée : des informations d'identification de toutes les unités de réseau optique connectées à l'extenseur de portée, et des informations d'identification de l'extenseur de portée, dans lequel les informations d'identification des unités de réseau optique sont obtenues par l'extenseur de portée pendant la mesure de distance ; et
déterminer, par le terminal de ligne optique, la topologie dans le réseau optique passif selon les informations reçues.

9. Procédé selon la revendication 8, dans lequel avant de recevoir, par le terminal de ligne optique, les informations rapportées par l'extenseur de portée, le procédé comprend en outre les étapes consistant à :
lorsque l'extenseur de portée accède au réseau optique passif, envoyer, par le terminal de ligne optique, une demande d'enregistrement à l'extenseur de portée, et attribuer des informations d'identité à l'extenseur de portée.

10. Procédé selon la revendication 9, dans lequel avant de recevoir, par le terminal de ligne optique, les informations rapportées par l'extenseur de portée, le procédé comprend en outre les étapes consistant à :
attribuer, par le terminal de ligne optique, une seule largeur de bande de liaison montante à une unité de réseau optique dans une trame de liaison descendante, la trame de liaison descendante transportant une valeur de compteur de supertrames ; et
attribuer, par le terminal de ligne optique, une largeur de bande de liaison montante à chacun des extenseurs de portée dans le système de réseau optique passif pour activer l'extenseur de portée pour rapporter si la trame de liaison montante est reçue dans la largeur de bande de liaison montante attribuée à l'unité de réseau optique.

11. Procédé selon la revendication 8, dans lequel après avoir déterminé, par le terminal de ligne optique, la topologie dans le réseau optique passif selon les informations, le procédé comprend en outre les étapes consistant à :
ajuster, par le terminal de ligne optique, un résultat de mesure de distance d'une unité de réseau optique connectée à l'extenseur de portée.

12. Procédé selon la revendication 11, dans lequel ajuster, par le terminal de ligne optique, le résultat de mesure de distance de l'unité de réseau optique connectée à l'extenseur de portée comprend les étapes consistant à :
mesurer de distance, par le terminal de ligne optique, l'unité de réseau optique connectée à l'extenseur de portée pour obtenir une valeur de différence de retard d'égalisation devant être ajustée pour l'unité de réseau optique ; et envoyer, par le terminal de ligne optique, la valeur de différence de retard d'égalisation à toutes les unités de réseau optique connectées à l'extenseur de portée, ou
recevoir, par le terminal de ligne optique, un message de commutation de l'extenseur de portée, le message de commutation transportant les informations suivantes : des informations d'identité de l'extenseur de portée et des informations pour compléter la commutation d'un canal de travail à un canal de secours ; et déterminer, par le terminal de ligne optique, une valeur de retard d'égalisation devant être ajustée pour toutes les unités de réseau optique connectées à l'extenseur de portée selon une valeur de différence de longueur entre des fibres optiques du canal de travail et du canal de secours, et envoyer la valeur de différence de retard d'égalisation à toutes les unités de réseau optique connectées à l'extenseur de portée.

13. Appareil pour déterminer une topologie dans un réseau optique passif comprenant un terminal de ligne optique, un extenseur de portée et une pluralité d'unités de réseau optique, l'appareil est agencé dans le terminal de ligne optique, et comprenant :
un module de réception (61) configuré pour recevoir les informations suivantes rapportées par l'extenseur de portée : des informations d'identification d'unités de réseau optique associées à l'extenseur de portée, et des informations d'identification de l'extenseur de portée ; et
un module de construction (62) configuré pour déterminer la topologie dans le réseau optique passif selon les informations reçues.
